# FASCICULE DE BREVET EUROPEEN

(11) **EP 1 648 842 B1**
(45) Date de publication et mention de la délivrance du brevet: **23.07.2008**
(21) Numéro de dépôt: 04767813.1
(22) Date de dépôt: 29.07.2004
(51) Int. Cl.: C04B 41/52, F16D 69/02

(54) **PROTECTION CONTRE L OXYDATION DE PIECES EN MATERIAU COMPOSIT E CONTENANT DU CARBONE ET PIECES AINSI PROTEGEES**
SCHUTZ VON KOHLENSTOFF ENTHALTENDEN VERBUNDMATERIALTEILCHEN GEGEN OXIDATION UND SO GESCHÜTZTE TEILE
PROTECTION AGAINST THE OXIDATION OF COMPOSITE MATERIAL PARTS CONTAINING CARBON AND PARTS THUS PROTECTED

(30) Priorité: 31.07.2003 FR 0309424
(43) Date de publication de la demande: 26.04.2006
(73) Titulaire: Snecma Propulsion Solide, 33187 Le Haillan Cedex (FR)
(72) Inventeur: DISS, Pascal, F-33185 Le Haillan (FR); THEBAULT, Jacques, F-33200 Bordeaux (FR)
(74) Mandataire: Joly, Jean-Jacques
(86) Numéro de dépôt international: PCT/FR2004/002034
(87) Numéro de publication internationale: WO 2005/012744

(56) Documents cités:
- EP-A- 0 495 570
- EP-A- 1 319 640
- FR-A- 2 838 071
- US-A- 5 853 821
- US-B1- 6 228 424

## Description

### Arrière-plan de l'invention

L'invention concerne la protection contre l'oxydation de pièces en matériau composite contenant du carbone, en particulier de pièces en matériau composite thermostructural comprenant un renfort en fibres de carbone densifié par une matrice au moins partiellement en carbone.

Les matériaux composites thermostructuraux sont **caractérisés par** leurs bonnes propriétés mécaniques et leur capacité à les conserver à des températures élevées. Toutefois, en milieu oxydant, cette capacité de conserver des bonnes propriétés mécaniques à température élevée est conditionnée par la présence d'une protection efficace contre l'oxydation. En effet, quel que soit le mode d'élaboration de tels matériaux, ils présentent inévitablement une porosité interne résiduelle ouverte offrant à l'oxygène du milieu ambiant un accès à coeur du matériau.

En outre, dans certaines applications, notamment des disques de frein en matériau composite carbone/carbone (C/C) utilisés en aéronautique, la protection contre l'oxydation doit conserver son efficacité en présence de catalyseurs d'oxydation (présents dans des produits déverglaçants utilisés sur les pistes d'atterrissage) et aussi en présence d'humidité (atterrissage et roulage sur des pistes humides).

A cet effet, il est bien connu d'utiliser des protections à base de phosphate d'aluminium, ou plus généralement à base de phosphates métalliques seuls ou en combinaison tels que des phosphates d'aluminium et de zinc. Le dépôt sur les pièces à protéger peut être contrôlé en quantité et en répartition géométrique, par exemple pour ne pas appliquer de composition de protection sur certaines parties des pièces telles que les surfaces frottantes de disques de frein où la présence de la composition de protection pourrait affecter les propriétés tribologiques. On utilise avantageusement un produit surfactant qui favorise la pénétration en profondeur de la composition de protection et qui est appliqué au préalable ou mélangé directement à la composition de protection, et on réalise une application de la composition de la même manière qu'une peinture. On pourra se référer par exemple aux documents US 5 853 821, EP 0 747 334, EP 0 677 499 et EP 0 606 851.

L'efficacité de telles compositions est toutefois limitée au-delà d'un certain seuil de température, environ 1000°C, à partir duquel intervient la décomposition de leurs composés actifs.

Pour améliorer la tenue au-delà de ce seuil, il est possible de combiner des protections contre l'oxydation à base de phosphate(s) métallique(s) avec des barrières de diffusion qui s'opposent à l'accès de l'oxygène vers le matériau composite aux températures élevées, telles que des phases vitreuses cicatrisantes ou des couches externes étanches, par exemple des couches externes en carbure de silicium (SiC) obtenues par dépôt chimique en phase vapeur ou par application d'une composition liquide contenant du carbure de silicium en suspension ou un précurseur de carbure de silicium (tel qu'une résine de type PCS - polycarbosilane - qui est transformée en carbure de silicium par traitement thermique). Toutefois, le processus de formation de la protection complète contre l'oxydation est alors beaucoup plus complexe, car la protection est constituée de deux couches superposées nécessitant chacune un processus de mise en oeuvre spécifique.

### Objets et résumé de l'invention

L'invention a pour but de fournir un procédé permettant de protéger contre l'oxydation des pièces en matériau composite contenant du carbone, avec une mise en oeuvre aisée et de façon efficace y compris en présence de catalyseurs d'oxydation, en présence d'humidité et en cas d'exposition à des hautes températures, supérieures à 1 000°C.

Ce but est atteint grâce à un procédé tel que défini par la revendication 1.

De façon connue, le diborure de titane TiB₂ se comporte comme un réservoir pour la formation très progressive d'oxydes tels TiO₂, B₂O₃ qui sont capables de conférer à la protection contre l'oxydation un caractère de barrière de diffusion vis-à-vis de l'oxygène du milieu ambiant, permettant une tenue à haute température, c'est-à-dire au-delà de 1 000°C, typiquement jusqu'à 1 400°C ou plus.

Mais surtout, par l'association avec l'élément phosphore P présent dans la composition et avec un métal Me issu, soit du précurseur du phosphate employé, soit de l'exposition à un catalyseur d'oxydation du carbone provenant de l'extérieur, TiB₂ est capable de former des oxydes complexes de type Ti-O-P-Me. La formation de tels oxydes permet ainsi de piéger du catalyseur d'oxydation venant de l'extérieur sous la forme d'un verre, c'est-à-dire au-delà de 1000°C. Le verre ainsi formé contribue en outre à l'effet barrière de diffusion à l'oxygène jusqu'à au moins 1400°C tout en étant insoluble dans l'eau, c'est-à-dire tout en permettant d'obtenir une protection stable en milieu humide.

La composition d'imprégnation peut comprendre des charges solides réfractaires autres que le diborure de titane, de préférence des charges autres que des borures, par exemple des charges de silice, alumine, argiles, notamment kaolin, talc, avantageusement sous forme de poudre.

Le ou les phosphates métalliques contenus dans la composition d'imprégnation peuvent être choisis parmi les phosphates d'aluminium, de zinc et de magnésium.

Typiquement, la composition d'imprégnation peut comprendre :
- entre 20 % et 70 % en masse de phosphate(s) métallique(s)
- entre 5 % et 50 % en masse de diborure de titane
- entre 20 % et 50 % en masse d'eau, et
- entre 0 % et 40 % en masse de charges soldes autres que le diborure de titane.

L'application de la composition d'imprégnation est réalisée avantageusement comme une peinture, par exemple à la brosse ou par projection.

On pourra réaliser une étape préliminaire de traitement de la pièce en matériau composite par imprégnation par une solution aqueuse d'un agent surfactif et séchage de la solution aqueuse, de manière à conférer au matériau composite une mouillabilité accrue par la présence d'agent surfactif.

Selon une autre particularité de mise en oeuvre du procédé, celui-ci peut comprendre une étape d'application d'une solution d'au moins un phosphate métallique dépourvue de charges solides, avant application de la composition contenant au moins un phosphate métallique en solution, du diborure de titane et d'autre charges solides éventuelles. Du fait de sa plus faible viscosité, la solution dépourvue de charges solides, notamment de diborure de titane, peut pénétrer plus profondément dans la porosité résiduelle interne ouverte du matériau composite. De la sorte, la protection contre l'oxydation comprend un ou plusieurs phosphate(s) métallique(s) ancré(s) dans la profondeur de la porosité du matériau composite et une association phosphate(s) métallique(s), diborure de titane et autres charges solides éventuelles plus proche de la surface de matériau composite.

L'invention a aussi pour but de fournir une pièce en matériau composite contenant du carbone protégée contre l'oxydation.

Ce but est atteint grâce à une pièce telle que définie par la revendication 8.

La protection contre l'oxydation peut comprendre en outre des charges solides réfractaires autres que le diborure de titane.

Selon une particularité de l'invention, la protection contre l'oxydation présente une teneur en diborure de titane plus élevée dans une partie située à proximité d'une surface de la pièce que dans une partie plus éloignée en profondeur de la surface de la pièce. Ainsi, la protection contre l'oxydation peut être dépourvue de diborure de titane dans sa partie la plus éloignée de la surface de la pièce.

### Brève description des dessins

D'autres particularités et avantages de l'invention ressortiront à la lecture de la description faite ci-après, à titre indicatif mais non limitatif, en référence aux dessins annexés, sur lesquels :
- la figure 1 est un ordinogramme montrant un mode de mise en oeuvre d'un procédé selon l'invention ;
- la figure 2 montre une variante du procédé de la figure 1 ; et
- les figures 3 à 12 montrent des courbes représentant la perte de masse d'échantillons en matériau composite C/C munis ou non d'une protection contre l'oxydation conformément à l'invention et soumis à des tests d'oxydation dans diverses conditions.

### Description détaillée de modes de réalisation de l'invention

L'invention s'applique à des pièces en matériau composite contenant du carbone, c'est-à-dire à des pièces formées d'un renfort fibreux densifié par une matrice, dans lesquelles les fibres de renfort et/ou la matrice sont au moins partiellement en carbone. Il s'agit typiquement de pièces en matériau composite C/C ou de pièces en matériau composite à renfort en fibres de carbone et à matrice céramique ou matrice mixte carbone-céramique. Des exemples de telles pièces sont des disques de frein, notamment des disques de freins d'avions.

L'élaboration de pièces en matériau composite de ce type comprend la formation d'une structure fibreuse de renfort et la densification de celle-ci par une matrice. La densification peut être réalisée par voie liquide, c'est-à-dire par imprégnation des fibres du renfort par une composition liquide contenant un précurseur de la matrice, par exemple une composition contenant une résine, et par transformation du précurseur par traitement thermique. La densification peut aussi être faite par voie gazeuse, c'est-à-dire par infiltration chimique en phase vapeur.

Quel que soit le mode d'élaboration, le matériau composite obtenu présente une porosité résiduelle ouverte interne, c'est-à-dire un ensemble de pores inter-communicants dans l'épaisseur du matériau.

La mise en place d'une protection contre l'oxydation par imprégnation au moyen d'une composition liquide consiste alors à former un revêtement des pores accessibles du matériau composite, sur une certaine profondeur à partir d'une surface de la pièce sur laquelle cette composition est appliquée.

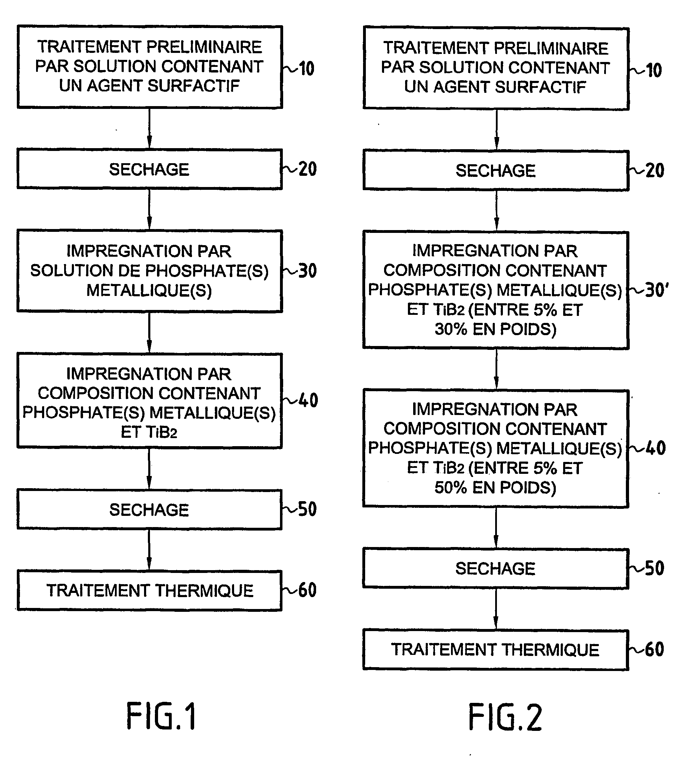

Dans le mode de réalisation de la figure 1, une première phase du procédé consiste à réaliser un traitement en profondeur de la pièce au moyen d'une solution aqueuse pénétrant au sein de la porosité ouverte du matériau (étape 10) et contenant un agent surfactif, ou agent mouillant. Après séchage (étape 20), l'agent surfactif présent sur la surface de pores du matériau confère à celui-ci une mouillabilité accrue.

Une telle phase préliminaire de traitement en profondeur de la pièce est décrite dans le document US 5 853 821 déjà cité.

On utilise avantageusement un agent surfactif, soluble dans l'eau et non ionique, tel qu'un acide gras oxyéthyléné, un alcool gras oxyéthyléné, un alkyl-phénol oxyéthyléné ou un ester de poly-ol supérieur. L'agent surfactif est ajouté à l'eau dans une proportion représentant de préférence entre 0,05 % et 5 % du poids de l'eau afin de conserver à la solution aqueuse une fluidité lui permettant de pénétrer facilement au coeur du matériau.

Le traitement préliminaire de la pièce peut être réalisé pour également nettoyer le matériau composite. A cet effet, la pièce est par exemple immergée dans un bac à ultrasons contenant l'agent surfactif en solution aqueuse.

Après traitement préliminaire, une première étape 30 d'imprégnation de la pièce en matériau composite par une solution aqueuse d'au moins un phosphate métallique peut être réalisée, sans addition de charges solides, notamment sans addition de diborure de titane. On utilise un ou plusieurs phosphates choisis de préférence parmi des phosphates d'aluminium, de zinc et de magnésium. La proportion en masse de phosphate(s) dans la solution est de préférence comprise entre 20 % et 70 %.

L'étape suivante 40, qui peut être réalisée avant ou après séchage de la solution aqueuse de phosphate(s) métallique(s), consiste à réaliser une nouvelle imprégnation de la pièce mais en utilisant une composition contenant au moins un phosphate métallique en solution aqueuse et du diborure de titane TiB₂ sous forme de poudre. On utilise au moins un phosphate métallique compris dans le groupe formé par des phosphates d'aluminium, de zinc et de magnésium.

Outre TiB₂, des charges réfractaires solides supplémentaires peuvent être ajoutées à la composition d'imprégnation. Ces charges contribuent notamment au comblement de la porosité du matériau composite. De préférence, les charges réfractaires supplémentaires ne comportent pas de borures. Elles peuvent être choisies parmi des poudres de silice, d'alumine, de kaolin, d'argile et de talc.

Typiquement, la composition d'imprégnation contient, en pourcentages en masse, entre 20 % et 70 % de phosphate(s) métallique(s), entre 5 % et 50 % de TiB₂, entre 20 % et 50 % d'eau et entre 0 % et 40 % de charges solides supplémentaires.

Afin de conserver une capacité d'imprégnation en profondeur dans le matériau composite, la granulométrie moyenne de la poudre de TiB₂ est de préférence comprise entre 0,1 µm et 200 µm. Il en est de même pour la granulométrie de la ou des poudres formant les charges solides supplémentaires.

La solution aqueuse, lors de l'étape 30, puis la composition d'imprégnation, lors de l'étape 40 peuvent être appliquées à la surface de la pièce en matériau composite sous pression atmosphérique, par exemple par peinture au moyen d'un pinceau ou d'une brosse ou par pulvérisation. Il n'est pas nécessaire de faire appel à une surpression ou au vide pour forcer la composition d'imprégnation à pénétrer profondément sous l'effet d'une différence de pression. En outre, l'application de la composition d'imprégnation peut facilement être réalisée de façon sélective sur certaines parties seulement de la pièce. Dans le cas de disques de frein, cela permet de ne pas appliquer de protection contre l'oxydation sur les faces frottantes, ce qui, sinon, pourrait affecter le comportement tribologique.

L'étape 30 peut être répétée plusieurs fois consécutivement, de même que l'étape 40.

Après l'étape 40, on procède à un séchage, par exemple en étuve à l'air, jusqu'à environ 350°C (étape 50).

Après séchage, la pièce est traitée thermiquement dans un four sous atmosphère neutre, par exemple sous atmosphère d'azote (étape 60), ce qui permet de former le composé actif pour la protection contre l'oxydation catalytique du carbone. Le traitement thermique est réalisé en élevant la température jusqu'à environ 700°C à 900°C.

On notera que la phase préliminaire (étapes 10, 20) et l'étape 30, sont optionnelles. Toutefois, la phase préliminaire permet d'assurer une imprégnation à coeur dans le matériau. Quant à l'étape 30, elle permet d'assurer la présence d'une protection contre l'oxydation à base de phosphate(s) en profondeur dans le matériau, la pénétration de la composition d'imprégnation jusqu'au coeur du matériau lors de l'étape 40 étant moins aisée en raison de la viscosité plus élevée de cette composition d'imprégnation. On obtient ainsi une pièce protégée contre l'oxydation avec une protection qui présente une teneur en diborure de titane plus élevée dans une partie située à proximité d'une surface de la pièce que dans une partie plus éloignée de la surface de la pièce. La protection contre l'oxydation mise en place peut même être dépourvue de diborure de titane ou de charges solides supplémentaires dans sa partie la plus éloignée de la surface de la pièce.

En variante (figure 2), après la phase de traitement préliminaire (étapes 10 et 20), on réalise une imprégnation (étape 30') par une composition contenant au moins un phosphate métallique en solution aqueuse et du diborure de titane.

La proportion de TiB₂ dans la composition d'imprégnation est toutefois de préférence limitée pour permettre une pénétration en profondeur. Typiquement, la composition d'imprégnation comprend, en pourcentages en masse, entre 20 % et 70 % de phosphate(s) métallique(s), et entre 5 % et 30 % de TiB₂, le reste étant de l'eau. Pour la même raison, on choisit une poudre de TiB₂ de granulométrie moyenne assez faible, par exemple inférieure à 100 µm.

Le procédé est ensuite poursuivi par des étapes 40, 50 et 60 d'imprégnation, de séchage et de traitement thermique semblables à celles du procédé de la figure 1.

Les exemples donnés plus loin montrent que la présence de Tub2 conduit à une amélioration nette du comportement en milieu oxydant des pièces protégées conformément à l'invention, en comparaison avec l'état de la technique illustré notamment par le document US 5 853 821, dans le cas d'exposition à des hautes températures (1000°C ou plus), en présence d'humidité et en présence de catalyseurs d'oxydation du carbone.

La déposante pense qu'outre la formation de B₂O₃ et TiO₂ par oxydation en cours d'utilisation, la présence de TiB₂ permet par association avec l'élément P et le métal Me issu du ou des phosphates ou d'un catalyseur d'oxydation éventuellement présent, la formation d'oxydes complexes Ti-P-O-Me capables de relayer au-delà de 1 000°C environ l'action protectrice du ou des phosphate(s) métallique(s), y compris en milieu humide, d'une part par piégeage du catalyseur d'oxydation et, d'autre part, par contribution à l'effet de barrière de diffusion à l'oxygène apporté par les oxydes simples B₂O₃ et TiO₂.

On notera aussi que ces propriétés n'apparaissent pas se retrouver avec des borures autres que TiB₂, de sorte que l'emploi ou l'ajout de borures autres que TiB₂ comme charges solides réfractaires supplémentaires apparaît plutôt indésirable.

### Exemple 1

Des échantillons en matériau composite C/C ont été réalisés de la façon suivante.

Des nappes fibreuses unidirectionnelles en fibres de précurseur de carbone (polyacrylonitrile préoxydé) sont superposées dans des directions différentes et liées entre elles par aiguilletage au fur et à mesure de leur superposition. La préforme fibreuse ainsi obtenue est soumise à un traitement thermique, pour transformer le précurseur en carbone par pyrolyse, puis densifiée par une matrice de carbone pyrolytique par infiltration chimique en phase vapeur. Un tel procédé est bien connu en soi. On pourra notamment se référer au document US 4 790 052. Des échantillons parallélépipédiques de dimensions 20 x 25 x 8 mm sont découpés dans le bloc de matériau C/C ainsi obtenu.

Plusieurs échantillons sont munis d'une protection contre l'oxydation par un processus comprenant les étapes suivantes :
(a) traitement préliminaire des échantillons par immersion dans un bac à ultrasons contenant une solution aqueuse d'agent surfactif à base d'isononylphénol polyéthoxylé disponible auprès de la société allemande Hüls sous la dénomination "Marlophen NP9", l'agent surfactif étant présent dans la solution à raison de 5 % en poids. Après imprégnation, les échantillons sont séchés en étuve, laissant les pores du matériau composite tapissés d'agent surfactif ;
(b) application au pinceau sur les faces des échantillons d'une solution aqueuse contenant 50 % en poids de dihydrogénophosphate d'aluminium AI(H₂PO₄)₃, le reste étant de l'eau, une telle solution étant notamment commercialisée en France par la société Europhos sous la dénomination phosphate aluminique (des solutions aqueuses de Al(H₂PO₄)₃ sont disponibles auprès d'autres fournisseurs, notamment la société allemande Chemishe Fabrik Budenheim KG) ;
(c) après quelques minutes, et avant séchage de la solution de Al(H₂PO₄)₃, application au pinceau sur les faces des échantillons d'une solution aqueuse contenant 35 % en poids d'Al(H₂PO₄)₃ et 44 % en poids de poudre de TiB₂ de granulométrie moyenne environ égale à 10 µm, le reste étant de l'eau ;
(d) séchage en étuve à l'air avec montée lente en température jusqu'à 350°C (environ 1°C/min) et paliers de 5 h à 90°C, 3 h à 150°C, 1 h à 220°C et 1 h à 350°C ; et
(e) traitement thermique dans un four sous atmosphère d'azote selon un cycle comprenant :
   - montée en température jusqu'à 300°C à une vitesse d'environ 5°C/min ;
   - montée de 300°C à 700°C à une vitesse d'environ 2°C/min, et
   - palier de 5 h à 700°C.

Des échantillons ainsi protégés selon un processus conforme à l'invention ont été soumis aux tests d'oxydation respectifs suivants, chaque test étant réalisé sur trois échantillons :
(I) Un cycle d'oxydation par exposition à l'air à 650°C pendant 5 h, retour à la température ambiante et "pollution" par immersion dans une solution aqueuse contenant 5 % en masse d'acétate de potassium, le reste étant de l'eau, et quatre cycles d'oxydation par expositions successives à l'air à 650°C pendant 5 h, avec retours intermédiaires à température ambiante (l'acétate de potassium étant un catalyseur d'oxydation de carbone et un constituant habituel de compositions déverglaçantes pour des pistes d'aéroport) ;
(II) test semblable au test (I) mais avec des cycles d'oxydation comprenant une exposition à l'air à 850°C pendant 30 min ;
(III) un cycle d'oxydation par exposition à l'air à 650°C pendant 5 h, exposition à l'air à 1 000°C pendant 1 h, pollution par immersion dans une solution aqueuse d'acétate de potassium (à 5 % en masse), et deux cycles d'oxydation successifs par exposition à l'air à 650°C pendant 5 h ;
(IV) un cycle d'oxydation par exposition à l'air à 650°C pendant 5 h, exposition à l'air à 1 200°C pendant 20 min, pollution par immersion dans une solution aqueuse d'acétate de potassium (à 5 % en masse) et deux cycles d'oxydation successifs par exposition à l'air à 650°C pendant 5 h ;
(V) test semblable au test (IV) mais sans pollution par l'acétate de potassium ;
(VI) test semblable au test (IV) mais sans pollution par l'acétate de potassium et une exposition à l'air à 1 400°C pendant 10 min (au lieu de 1 200°C pendant 20 min) après le premier cycle d'oxydation ;
(VII) test semblable au test (IV) mais en remplaçant l'étape de pollution par l'acétate de potassium par une étape d'immersion dans de l'eau du robinet à température ambiante pendant 24 h ;
(VIII) test semblable au test (IV) mais en remplaçant l'étape de pollution par l'acétate de potassium par une étape d'immersion dans de l'eau bouillante pendant 1 h.

A titre de comparaison, chaque test a aussi été réalisé sur trois échantillons de même matériau composite C/C mais protégés par le procédé de l'art antérieur décrit dans le document US 5 853 821, c'est-à-dire un procédé comprenant des étapes telles que les étapes (a), (b) (répétée une fois), (d) et (e) ci-dessus, donc sans imprégnation par une composition contenant TiB₂.

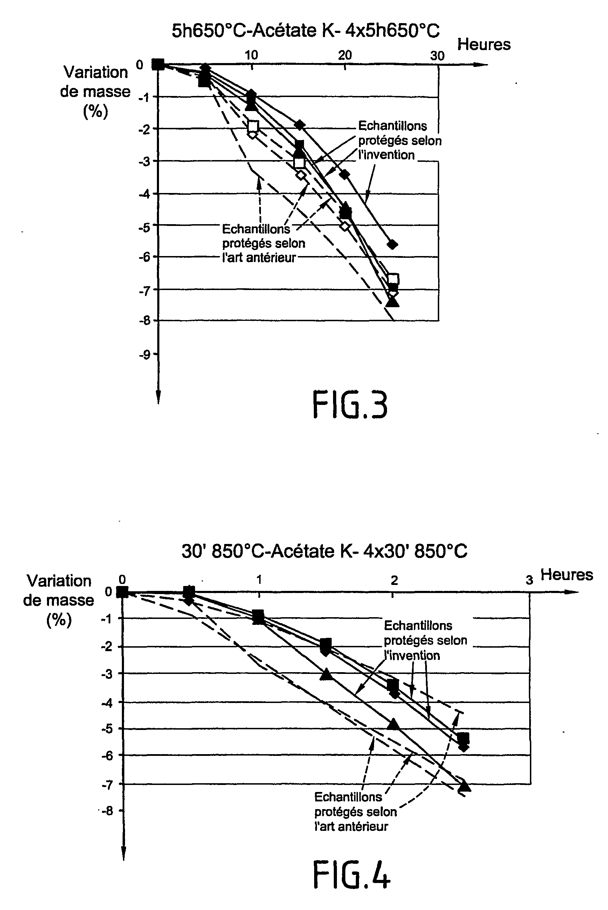

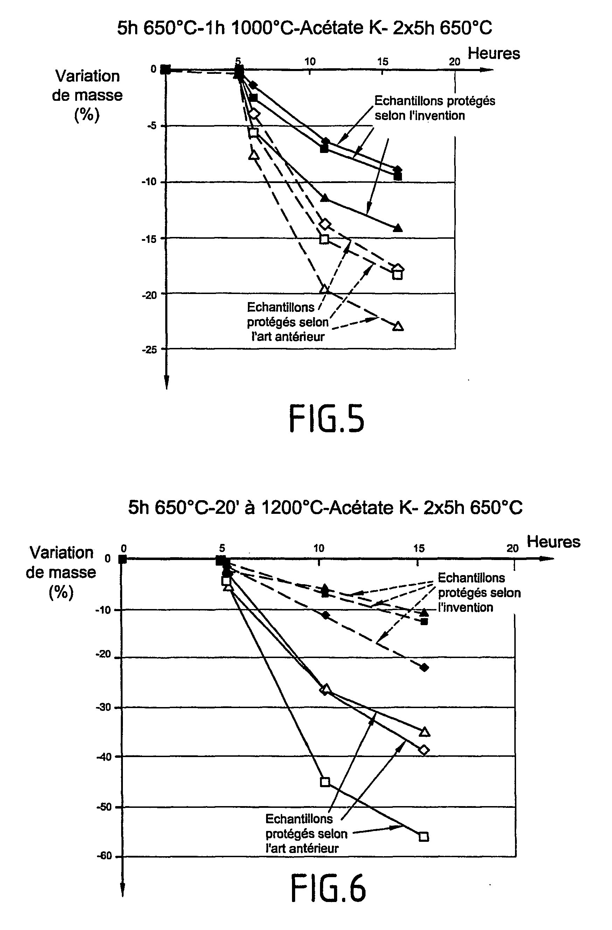

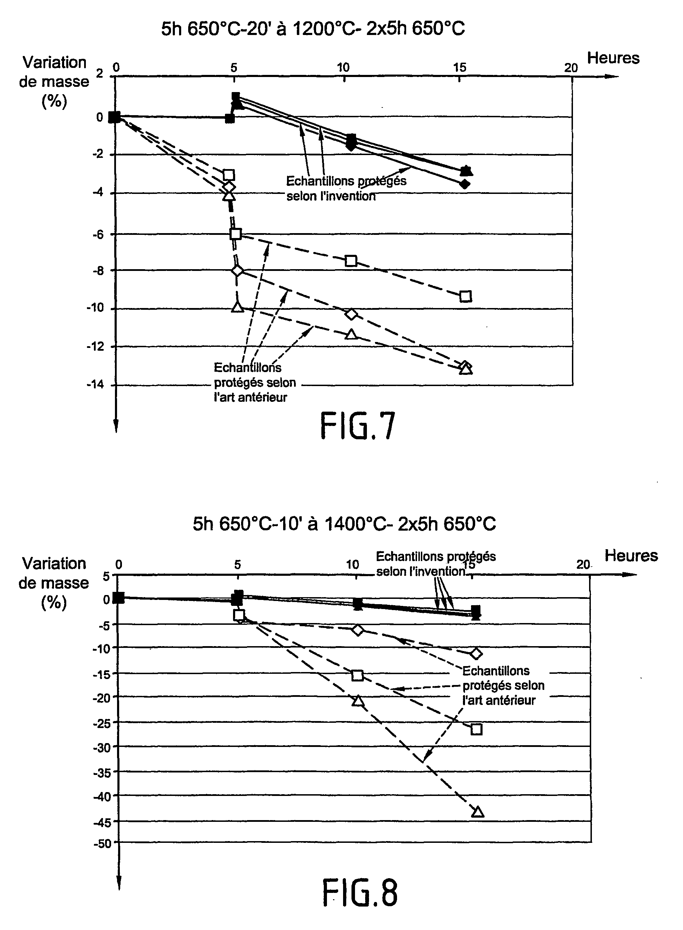

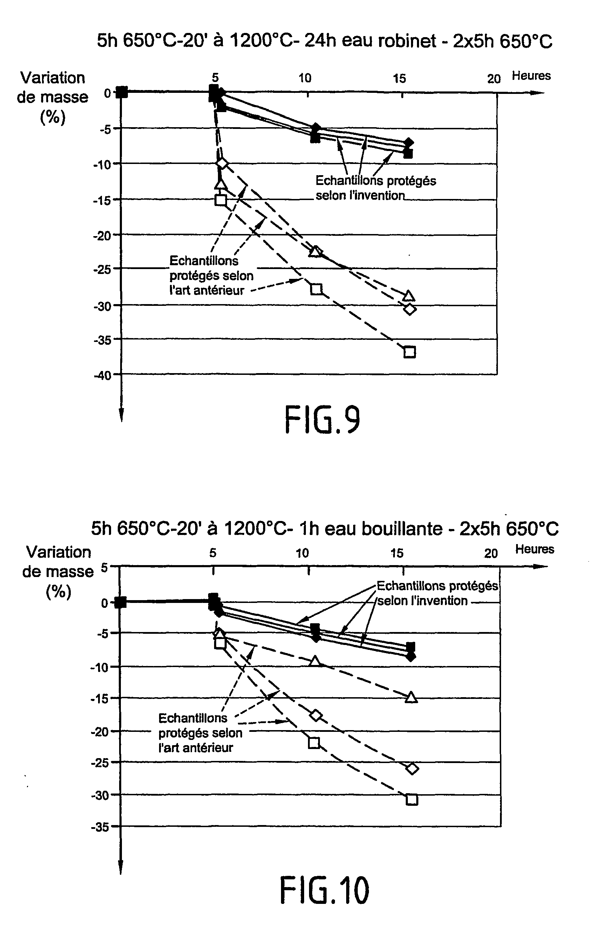

Le tableau I ci-dessous et les courbes des figures 3 à 10 montrent les pertes de masse mesurées après chaque test, en pourcentage par rapport à la masse initiale, sur les échantillons protégés selon un processus conforme à l'invention et sur les échantillons de référence protégés selon le procédé de l'art antérieur.

**Tableau I**

| Test | | Perte de masse relative | | | | | |
|---|---|---|---|---|---|---|---|
| | | Echantillons protégés conformément à l'invention selon l'exemple 1 | | | Echantillons protégés de référence | | |
| (I) | - 1 x 5 h - 650°C - pollution acétate K -4x5h-650°C | 5,5 % | 6,9 % | 7,3 % | 6,7 % | 7 % | 8 % |
| (II) | - 1 x 30 min - 850°C - pollution acétate K - 4 x 30 min - 850°C | 5,2 % | 5,5 % | 7 % | 4,4 % | 6,9 % | 7,3 % |
| (III) | - 1 x 5 h - 650°C -1x1h-1000°C - pollution acétate K -2x5h-650°C | 9 % | 9,5 % | 14% | 17,5 % | 18% | 23 % |
| (IV) | - 1X 5 h - 650°C - 1x 20 min - 1 200°C - pollution acétate K -2x5h-650°C | 11 % | 12 % | 22 % | 35% | 39% | 56 % |
| (V) | - 1 x 5 h - 650°C - 1 x 20 min - 1 200°C -2x5h-650°C | 2,6 % | 2,6 % | 3,4 % | 9,2 % | 13 % . | 13 % |
| (VI) | - 1 x 5 h - 650°C -1x10min-1400°C -2x5h-650°C | 2% | 3% | 3,5% | 11,5% | 27 % | 43,5% |
| (VII) | - 1 x 5 h - 650°C - 1 x 20 min -1200°C - 24 h immersion eau température ambiante -2x5h-650°C | 6,5 % | 7,5 % | 8 % | 29 % | 31 % | 37 % |
| (VIII) | - 1 x 5 h - 650°C - 1 x 20 min 1 200°C - 1 h immersion eau bouillante -2x5h-650°C | 7,5 % | 8 % | 9 % | 15,5% | 26 % | 31 % |

Les résultats des tests montrent que, par rapport à l'art antérieur considéré, la protection contre l'oxydation mise en oeuvre selon un procédé conforme à l'invention présente les caractéristiques suivantes :
- une efficacité semblable en présence de catalyseur d'oxydation du carbone pour une exposition à des températures de 650°C et 850°C,
- une efficacité très sensiblement accrue en présence de catalyseur d'oxydation après exposition à 1000°C (en moyenne environ 11 % de perte de masse contre 20 %) et à 1200°C (en moyenne environ 14 % de perte de masse contre 43 %),
- une efficacité considérablement accrue en l'absence de catalyseur d'oxydation après exposition à 1200°C (en moyenne environ 3 % de perte de masse contre 12 %) et à 1400°C (en moyenne environ 3 % de perte de masse, contre 24 % et plus de dispersion des résultats),
- une efficacité considérablement plus élevée en environnement humide (en moyenne environ 7 % de perte masse contre 32 % après immersion dans de l'eau à température ambiante pendant 24 h, et en moyenne environ 8 % de perte de masse contre 24 % et une forte dispersion des résultats après immersion dans de l'eau bouillante pendant 1 h).

### Exemple 2

On procède comme dans l'exemple 1, mais en utilisant, dans l'étape (c), une composition d'imprégnation contenant, en pourcentage massiques, 32 % de Al(H₂PO₄)₃ et 56 % de ZrB₂, le reste étant de l'eau.

Plusieurs échantillons protégés selon le procédé de l'exemple 2 sont soumis à un test d'oxydation identique au test (V) ci-dessus.

Le tableau II ci-dessous montre les pertes de masse relatives mesurées sur les différents échantillons après réalisation du test d'oxydation (en pourcentage par rapport à la masse initiale). A titre de comparaison, on a reporté dans le tableau II les pertes de masse observées lors du même test d'oxydation sur des échantillons protégés selon l'exemple 1 et sur des échantillons protégés de référence.

**Tableau II(Test 1 x 5 h - 650°C + 1 x 20 min - 1 200°C + 2 x 5 h - 650°C)**

| Echantillons | Perte de masse |
|---|---|
| Protégés selon exemple 1 | 2,6 % |
| | 2,6 % |
| | 3,4 % |
| Protégés selon exemple 2 | 10,1 % |
| | 11,4 % |
| | 12,5 % |
| De référence | 9,2 % |
| | 13 % |
| | 13 % |

Les résultats montrent que la substitution de TiB₂ par ZrB₂ dans la composition d'imprégnation se traduit par une perte sensible d'efficacité de la protection contre l'oxydation, celle-ci étant voisine de celle observée sur un échantillon protégé selon l'art antérieur.

### Exemple 3

On utilise des échantillons en matériau composite C/C tels que ceux utilisés dans l'exemple 1 et on met en place une protection contre l'oxydation en modifiant le processus décrit dans l'exemple 1 de la façon suivante :
- utilisation lors de l'étape (b) d'une composition d'imprégnation contenant, en pourcentages massiques, 44 % de Al(H₂PO₄)₃ et 14 % de TiB₂ en poudre de granulométrie moyenne environ égale à 10 µm, le reste étant de l'eau,
- utilisation lors de l'étape (c) d'une composition d'imprégnation contenant, en pourcentages massiques, 34 % de Al(H₂PO₄)₃ et 39 % de TiB₂ en poudre de granulométrie moyenne environ égale à 10 µm.

### Exemple 4

On procède comme dans l'exemple 3, mais en utilisant, lors de l'étape (b), une composition contenant, en pourcentages massiques, 39 % de Al(H₂PO₄)₃ et 28 % de TiB₂ en poudre de granulométrie moyenne environ égale à 10 µm, le reste étant de l'eau, et, lors de l'étape (c), une composition contenant, en pourcentages massiques, 35 % de Al(H₂PO₄)₃ et 44 % de TiB₂ en poudre de granulométrie moyenne environ égale à 10 µm.

Deux échantillons E₃, E₄ protégés selon les procédées des exemples 3 et 4, respectivement sont soumis à un test d'oxydation identique au test (IV) ci-dessus.

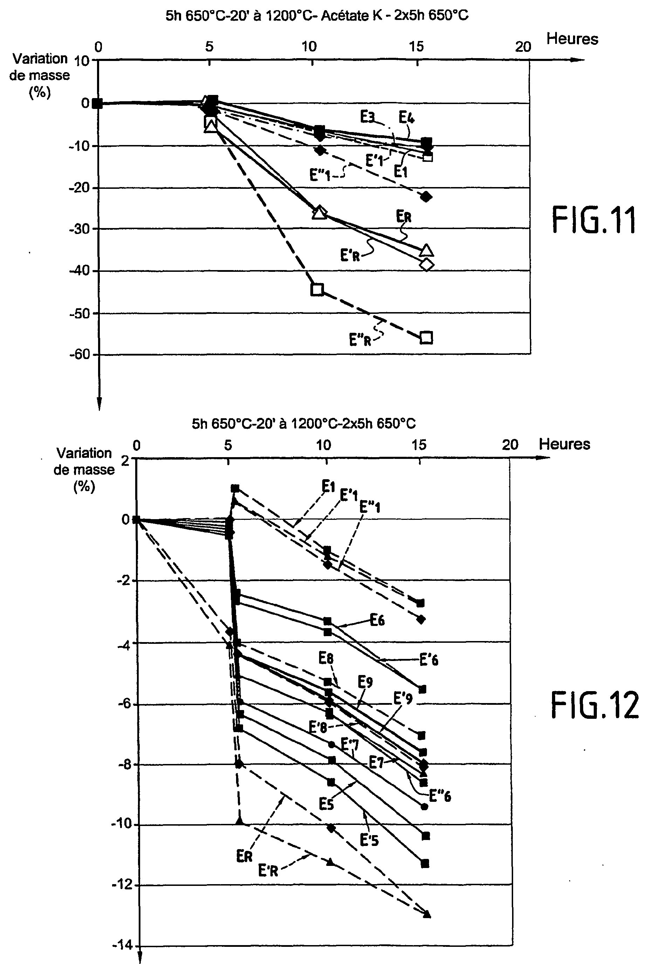

Le tableau III ci-dessous et la figure 11 montrent les pertes de masse relatives mesurées (en pourcentage par rapport à la masse initiale) après réalisation du test d'oxydation, en reprenant les résultats obtenus avec des échantillons E₁, E'_{1,} E"₁ protégés selon l'exemple 1 et des échantillons protégés de référence E_{R}, E'_{R}, E"_{R}.

**Tableau III(Test 1 x 5 h - 650°C + 1 x 20 min - 1 200°C + pollution acétate de K + 2 x 5 h - 650°C)**

| Echantillon E₃ protégé selon exemple 3 | Echantillon E₄ protégé selon exemple 4 | Echantillons E₁, E'₁, E"1 protégés selon exemple 1 | | | Echantillons E_{R'}, E'_{R'}, E"_{R} protégés de référence | | |
|---|---|---|---|---|---|---|---|
| 10% | 9,5% | 11% | 12% | 22% | 35% | 39% | 56% |

On constate que l'incorporation de TiB₂ dans la première composition d'imprégnation contenant du phosphate permet d'obtenir une protection efficace. Elle rend toutefois moins aisée une imprégnation à coeur.

Les exemples qui précèdent démontrent l'avantage déterminant apporté par l'utilisation de TiB₂ comme source de formation d'oxydes capables d'assurer une fonction de barrière de protection vis-à-vis de l'oxygène du milieu ambiant et, capables de former avec le phosphore et le métal (qu'il provienne du ou des phosphate(s) employés ou d'un catalyseur d'oxydation du carbone), des verres résistants à l'humidité et piégeant des catalyseurs d'oxydation venant de l'extérieur.

### Exemple 5

On procède comme dans l'exemple 1 à l'exception de l'étape (c) où l'on utilise une composition contenant, en poids, 23 % de Al(H₂PO₄)₃, 37 % de poudre de TiB₂, 9 % de poudre de kaolin et 30 % d'eau.

### Exemple 6

On procède comme dans l'exemple 1 à l'exception de l'étape (c) où l'on utilise une composition contenant, en poids, 24 % de Al(H₂PO₄)₃, 39 % de poudre de TiB₂, 5 % de poudre de kaolin, 5 % de poudre d'alumine et 27 % d'eau.

### Exemple 7

On procède comme dans l'exemple 1 à l'exception de l'étape (c) où l'on utilise une composition contenant, en poids, 25 % de Al(H₂PO₄)₃, 40 % de poudre de TiB₂, 10 % d'hydroxyde d'aluminium Al(OH)₆ et 25 % d'eau.

### Exemple 8

On procède comme dans l'exemple 1 à l'exception de l'étape (c) où l'on utilise une composition contenant, en poids, 25 % de Al(H₂PO₄)₃, 40 % de poudre de TiB₂, 10 % de phosphate de zinc Zn₃(PO₄)₂ et 25 % d'eau.

### Exemple 9

On procède comme dans l'exemple 1 à l'exception de l'étape (c) où l'on utilise une composition contenant, en poids, 25 % de Al(H₂PO₄)₃, 40 % de poudre de TiB₂, 10 % de métaphosphate d'aluminium Al(PO₃)₃ et 25 % d'eau.

Des échantillons E₅ et E'₅ protégés selon l'exemple 5, E₆, E'₆ et E"₆ protégés selon l'exemple 6, E₇ et E'₇ protégés selon l'exemple 7, E₈ et E'₈ protégés selon l'exemple 8, et E₉ et E'₉ protégés selon l'exemple 9 sont soumis à un test d'oxydation identique au test (V) ci-dessus.

La figure 12 montre les pertes de masse relatives mesurées (en pourcentage par rapport à la masse initiale) pour ces différents échantillons, ainsi que pour des échantillons E₁, E'₁, E"₁ protégés selon l'exemple 1 et des échantillons protégés de référence E_{R}, E'_{R}.

On constate que les échantillons protégés selon les exemples 5 à 9, présentent une tenue à l'oxydation améliorée par rapport aux échantillons de référence, même si elle est plus ou moins dégradée par rapport aux échantillons protégés selon l'exemple 1. Cela démontre la possibilité, dans le cadre de l'invention, d'utiliser des charges solides inertes (kaolin, alumine) permettant de diminuer le coût, de même que des charges réactives (hydroxyde d'aluminium), des phosphates autres que Al(H₂PO₄)₃ dotés de propriétés anticatalytiques (tel que phosphate de zinc) ou encore un phosphate d'aluminium autre que Al(H₂PO)₃.

La proportion en poids d'un ou plusieurs de ces constituants autres que TiB₂, Al(H₂PO₄)₃ et H₂O dans la composition utilisée pour application de la deuxième couche de protection (étape (c)) est de préférence comprise entre 0 % et 40 %.

## Revendications

1. Procédé de protection contre l'oxydation d'une pièce en matériau composite contenant du carbone et présentant une porosité résiduelle interne ouverte, comprenant au moins une étape d'imprégnation par une composition contenant au moins un phosphate métallique en solution et des charges solides,
**caractérisé en ce que**, pour conférer à la pièce en matériau composite une résistance à l'oxydation à une température supérieure à 1000°C, y compris en présence de catalyseur d'oxydation du carbone ou en présence d'humidité, le procédé comprend au moins une étape d'application d'une composition d'imprégnation contenant, en pourcentages en masse, entre 20% et 70% de phosphate(s) métallique(s), entre 5% et 50% de diborure de titane sous forme de poudre de granulométrie comprise entre 0,1 µm et 200 µm, entre 20% et 50% d'eau et entre 0% et 40% de charges solides réfractaires autres que le diborure de titane.

2. Procédé selon la revendication 1, **caractérisé en ce que** les charges solides réfractaires supplémentaires sont choisies parmi la silice, l'alumine, des argiles, le kaolin et le talc.

3. Procédé selon l'une quelconque des revendications 1 et 2, **caractérisé en ce que** la composition d'imprégnation contient au moins un phosphate métallique choisi parmi les phosphates d'aluminium, de zinc et de magnésium.

4. Procédé selon l'une quelconque des revendications 1 à 3, **caractérisé en ce qu'**il comprend une phase préliminaire de traitement de la pièce en matériau composite par imprégnation par une solution contenant un agent surfactif et séchage, de manière à conférer au matériau composite une mouillabilité accrue par la présence de l'agent surfactif.

5. Procédé selon l'une quelconque des revendications 1 à 4, **caractérisé en ce qu'**il comprend au moins une étape d'application d'une solution d'au moins un phosphate métallique dépourvue de charges solides, avant application de la composition d'imprégnation contenant au moins un phosphate métallique en solution et du diborure de titane.

6. Disque de frein aéronautique en matériau composite carbone/carbone et muni d'une protection contre l'oxydation obtenue par le procédé de l'une quelconque des revendications 1 à 5.

## Claims

1. A method of protecting a part made of composite material containing carbon against oxidation, the part presenting residual open internal pores, the method comprising at least one step of impregnation by a composition containing at least one metal phosphate in solution and solid fillers,
**characterized in that,** in order to impart to the composite material part a resistance against oxidation at a temperature higher than 1000°C, including in the presence of carbon oxidation catalyst or, in the presence of moisture, the method comprises at least one step of applying an impregnation composition containing, in percentage by weight, 20% to 70% metal phosphate(s), 5% to 50% titanium diboride in the form of a powder having grain size lying in the range 0.1 µm to 200 µm, 20% to 50% water, and 0% to 40% refractory solid filler other than titanium diboride.

2. A method according to claim 1, **characterized in that** the additional refractory solid filler is selected from silica, aluminum, clays, kaolin, and talc.

3. A method according to any one of claims 1 and 2, **characterized in that** the impregnation composition contains at least one metal phosphate selected from aluminum, zinc, and magnesium phosphates.

4. A method according to any one of claims 1 to 3, **characterized in that** it includes a preliminary stage of treating the composite material part by impregnating it with a solution containing a wetting agent, and drying it, so as to confer wettability on the composite material that is increased by the presence of the wetting agent.

5. A method according to any one of claims 1 to 4, **characterized in that** it includes at least one step of applying a solution of at least one metal phosphate without any solid filler, prior to applying the impregnation composition containing at least metal phosphate in solution and titanium diboride.

6. An aircraft brake disk in a carbon/carbon composite material and provided with protection against oxidation obtained by the method of anyone of claims 1 to 5.

## Patentansprüche

1. Verfahren zum Schutz eines Kohlenstoff enthaltenden und eine offene innere Restporosität aufweisenden Teils aus Verbundwerkstoff gegen Oxidation, das wenigstens einen Schritt zum Imprägnieren mit einer Zusammensetzung, die wenigstens ein Metallphosphat in Lösung sowie feste Füllstoffe enthält, umfaßt, **dadurch gekennzeichnet, daß** das Verfahren, um dem Teil aus Verbundwerkstoff auch bei Vorhandensein eines Katalysators zur Oxidation des Kohlenstoffs oder bei Vorliegen von Feuchtigkeit eine Beständigkeit gegen Oxidation bei einer Temperatur von über 1000°C zu verleihen, wenigstens einen Schritt zum Auftragen einer Imprägnierzusammensetzung umfaßt, die 20 bis 70 Massenprozent Metallphosphat(e), 5 bis 50 Massenprozent pulverförmiges Titandiborid mit einer Korngröße zwischen 0,1 µm und 200 µm, 20 bis 50 Massenprozent Wasser und 0 bis 40 Massenprozent anderer feuerfester fester Füllstoffe als Titandiborid enthält.

2. Verfahren nach Anspruch 1, **dadurch gekennzeichnet, daß** die zusätzlichen feuerfesten festen Füllstoffe unter Siliziumdioxid, Aluminiumoxid, Tonen, Kaolin und Talk ausgewählt sind.

3. Verfahren nach irgendeinem der Ansprüche 1 und 2, **dadurch gekennzeichnet, daß** die Imprägnierzusammensetzung wenigstens ein Metallphosphat enthält, das unter den Aluminium-, Zink- und Magnesiumphosphaten ausgewählt ist.

4. Verfahren nach irgendeinem der Ansprüche 1 bis 3, **dadurch gekennzeichnet, daß** es eine vorangehende Phase zur Behandlung des Verbundwerkstoffteils durch Imprägnieren mit einer ein grenzflächenaktives Mittel enthaltenden Lösung und durch Trocknen umfaßt, um dem Verbundwerkstoff durch das Vorliegen des grenzflächenaktiven Mittels eine erhöhte Benetzbarkeit zu verleihen.

5. Verfahren nach irgendeinem der Ansprüche 1 bis 4, **dadurch gekennzeichnet, daß** es wenigstens einen Schritt zum Auftragen einer Lösung wenigstens eines Metallphosphats, ohne feste Füllstoffe, vor Anwenden der wenigstens ein Metallphosphat in Lösung sowie Titandiborid enthaltenden Imprägnierzusammensetzung umfaßt.

6. Bremsscheibe für die Luftfahrt aus KohlenstofflKohlenstoff-Verbundwerksstoff, die mit einem Oxidationsschutz versehen ist, der durch das Verfahren nach irgendeinem der Ansprüche 1 bis 5 erhalten wird.
